# EUROPEAN PATENT APPLICATION

(11) **EP 3 674 759 A1**
(43) Date of publication of application: **01.07.2020**
(21) Application number: 18216009.3
(22) Date of filing: 31.12.2018
(51) Int. Cl.: G02B 6/12, G02B 6/42, G02B 6/43, H01L 51/00, G02B 6/136

(54) **INTEGRATION OF ACTIVE COMPONENT ON PHOTONICS PLATFORM**

(71) Applicant: Indigo Diabetes N.V., 9052 Gent (BE)
(72) Inventor: CARDILE, Paolo, 9000 Gent (BE); VAN SCHUYLENBERGH, Koenraad, 2290 Vorselaar (BE); VAN ACOLEYEN, Karel, 9000 Gent (BE); DELBEKE, Danaë, 9050 Gentbrugge (BE)
(74) Representative: DenK iP

(57) **Abstract**

A photonics integrated circuit (10, 20) comprises a photonics platform (100, 400, 500, 600) comprising a waveguide layer (102) having a waveguide and a wiring substrate (201, 603) with an active component (202, 405, 506) positioned thereon and extending therefrom. The active component (202, 405, 506) has a component top surface facing away from the wiring substrate and component side surfaces through which radiation can be coupled. The photonics platform (100, 400, 500, 600) comprises a recess (104, 502) wherein the active component (202, 405, 506) can be positioned such that the component top surface of the active component (202, 405, 506) is positioned on a surface of the recess (104, 502). The photonics platform (100, 400, 500, 600) and the active component (202, 405, 506) are being configured for allowing lateral optical coupling between the waveguide in the photonics platform (100, 400, 500, 600) and at least one of the component side surfaces of the active component (202, 405, 506).

## Description

### Field of the invention

The invention relates to the field of photonics. More specifically it relates to integration and coupling of active components, such as for example light sources, in photonics platforms.

### Background of the invention

Optical platforms for transmission of optical signals can be used for a variety of applications such as sensing, information communication, signal conversion, ... and are applied in different fields such as telecommunications, health applications... A number of photonic platforms have been developed in recent decades, of which silicon based photonic platforms are the most popular.

However, some optical components, such as infrared light sources, cannot be monolithically obtained in a silicon platform, because they have an inherently poor energy efficiency. Photodetectors have been recently realized in a CMOS process flow, but they have some limitation on the cut-off wavelengths. Similarly, it is not possible to monolithically fabricate electro-optics components (like switches, modulators, etc.) in a silicon nitride (SiN) platform because it responds poorly to electrical signals.

To overcome all these problems, photonics platforms are usually prepared to introduce active components that are made of different materials like III-V semiconductors, in which the material properties provide better active device properties, and are thereafter integrated in or on the passive photonics platform.

Such integration can be done in a variety of ways. The most commonly used is flip-chip where a light source or a photodiode is aligned and then mounted to the input or the output ports of a photonic circuit such as a grating coupler. One of the major difficulties occurring in these integration techniques relates to obtaining a good alignment accuracy of the active component onto the photonic structures. Usually an accuracy of circa 1 µm or better is required, especially when the component is the light source: even a micron-size misalignment can cause losses because light needs to be coupled to a mode size structure. Conventional flip-chip is a passive alignment technique, meaning that the component is switched off while the bonding process happens and alignment is solely based on physical part geometry and alignment marks. The quality of the bonding is thus essentially related to the accuracy of the tool that performs the flip-chip process. In some cases, active alignment can be performed, whereby the alignment is done with the component in active operation (e.g. the light source produces light), and whereby the component alignment is adjusted until optimal performance of the component-photonics assembly is observed, after which the component is permanently attached to the photonics. This requires that the component (e.g. light source) is mounted on a support or optical bench that provides a mechanical hold for the aligner and allows actively operating the component by means of temporary electrical connections. However, these supports or optical benches are typically bulky.

If horizontal light coupling is required, for instance if the light source bandwidth is too wide for a grating coupler, the flip-chip approach is not applicable. Several alternative approaches have been attempted to achieve accurate alignment, but they have been proven unpractical and require additional alignment tweaking after component placement.

Transfer-printing has been proposed recently which allows horizontal coupling and compact integration, but alignment reproducibility is poor because it relies on a shear-driven component release process using a PDMS stamp. In addition, the process is heavily material dependent. For example, printing III-V components involves a certain level of mechanical stress intrinsic to the process, that may result in structural material defects, such as dislocations that may later reduce the quality of the epitaxial layers in the light source. This quality reduction may cause current leakage, lower efficiency, etc. Transfer-printing is also a passive alignment bonding technique. Transfer-printing also often requires post processing after component placement, e.g. to create metallization layers for electrical wiring. These associated deposition, patterning and etching processes need to be performed in a manufacturing facility that allows side-by-side processing of CMOS-compatible (silicon) and non-compatible materials (III-V, gold...). In reality, this requires a separate dedicated facility since commercial CMOS facilities never allow gold in the fab because it kills the performance of the CMOS circuit components.

### Summary of the invention

It is an object of embodiments of the present invention to provide a photonics integrated circuit which provides good and compact integration of an active component onto a photonics platform, with easy handling and high alignment accuracy, even allowing horizontal edge coupling between the active component and the photonics platform.
The present invention relates to a photonics integrated circuit comprising a photonics platform comprising a waveguide layer having a waveguide for guiding radiation in said photonics platform,
a wiring substrate and an active component positioned on and extending from the wiring substrate, the wiring substrate comprising a conductive element for providing electric signals to the active component, the active component having a component top surface facing away from the wiring substrate and component side surfaces whereby the active component is configured for coupling radiation to and/or from the active component through at least one of the component side surfaces,
wherein
the photonics platform comprises a recess in a substrate top surface of the photonics platform, the recess having at least one parallel surface substantially parallel with the substrate top surface of the photonics platform, and
the active component is being positioned in the recess such that the component top surface of the active component is positioned on the at least one parallel surface of the recess,
the photonics platform and the active component being configured for allowing lateral optical coupling between the waveguide in the photonics platform and at least one of the component side surfaces of the active component.
In some embodiments, the wiring substrate may be a flexible substrate.
It is an advantage of embodiments of the present invention that good hybrid photonics integrated circuits can be provided, combining a passive photonics substrate with active components. It is an advantage that good hybrid integration of active components in/on a passive photonics substrate can be achieved. It is an advantage of embodiments of the present invention that good alignment between an active component and a passive photonics substrate can be achieved. It is an advantage of embodiments of the present invention that accurate alignment can be achieved in a z-direction, being a height direction of the photonics substrate, such that active components adapted for coupling radiation through one or more side surfaces can efficiently couple radiation to or from a waveguide in the passive photonics substrate. It is an advantage of embodiments of the present invention that aligning in the z-direction is mainly determined by the shape of the structured recess in the passive photonics substrate and the height of the active component on the wiring substrate, two parameters that can be controlled accurately. The shape of the structured recess in the passive photonics substrate can be accurately determined using conventional processing steps in the photonics platform. The height of the active component, and more particularly the position of the coupling surfaces in the side surfaces of the active component, can be controlled accurately using conventional processing steps in the manufacturing of the active component. Since the active component and the photonics substrate can be produced in separate production steps not influencing each other, in view of the hybrid integration, a good accuracy can be obtained for these parameters and thus for alignment in the z direction of the active component with respect to the waveguide in the photonics substrate.
It is an advantage of embodiments of the present invention that compatibility between materials of the platform (e.g. silicon) and materials of the active component (e.g. materials of the III-V group), for example in view of the manufacturing procedures required, is no issue since the photonics integrated circuit is hybridly integrated and the active component(s) can be made separately from the passive photonics substrate. It thereby is an advantage of embodiments of the present invention that the manufacturing processes that can be used for manufacturing the different elements are well known and relatively inexpensive.
The wiring substrate further may comprise an interconnection in contact with the conductive element. The photonics substrate may comprise a redistribution layer in electric contact with the interconnection of the wiring substrate.
It is an advantage of embodiments of the present invention that handling of electrical connection of the active component can be robust and simple. It is an advantage of embodiments of the present invention that electric signals, for example powering signals, can be sent to the active component through the wiring substrate.
It is an advantage of embodiments of the present invention that electrical powering of the active component can be performed via the photonic substrate through the wiring substrate, such that a highly integrated and compact solution can be provided.
The active component may be at one side in direct contact with the wiring substrate and may comprise at said one side a first electrical contact for electrically connecting the active component. The active component may comprise a alternatively or in addition thereto an electrical connection, e.g. referred to as a second electrical connection, at the component top surface at an opposite side of the side in direct contact with the wiring substrate.
The recess may comprise a cavity positioned below the height of the parallel surface, the cavity hosting a conductor in connection with the second electrical connection at the component top surface of the active component for electrically powering the active component.
It is an advantage of embodiments of the present invention that wiring can be routed to the surface including contacts of the active component, even if said surface is facing the photonics substrate. Alternatively, the active component may be electrically connected through electrical paths integrated in the wiring substrate and running to the component top surface, instead of using a separate conductor.
The photonic platform further may comprise a heat sink and the structured recess is shaped so that thermal contact is provided between the active component received in the recess and the heat sink. Alternatively or in addition thereto, the wiring substrate may provide a heat sink.
It is an advantage of embodiments of the present invention that substrate serves as a thermal sink of the active component.
Attachment between the active component and the photonics substrate may be provided by adhesive, the adhesive being transparent to the radiation that can be interchanged between the platform and the active component.
It is an advantage of embodiments of the present invention that adhesive provides sufficient fixation while not disturbing optical coupling. It is a further advantage that the recess allows using a very small quantity of adhesive, for example microliters of adhesive, thus reducing costs and shrinkage issues.
The active component may be for example a radiation emitting device, such as an active light source, or any of an active modulator, a tunable filter, an active phase shifter, an active multiplexer or an active demultiplexer, or a detector.
It is an advantage of embodiments of the present invention that a photonics integrated circuit with a hybridly integrated component such as a radiation source can be provided. It is a further advantage of at least some embodiments of the present invention that active alignment can be obtained using a radiation emitting device in the photonics substrate or, if the active component is a radiation emitting device, the active component to be integrated itself.
The active component may be configured for coupling radiation at at least two positions to and/or from the active component, and wherein the photonics substrate may comprise at least one detection element for detecting, during an alignment procedure, radiation coupled between the active component and the photonics substrate so as to optimize alignment.
Coupling can occur at the same component side surface or at different component side surfaces. It is an advantage of embodiments of the present invention that active alignment in x and y direction of the active component can be obtained. The x and y direction are extending in the direction in the plane of the photonic substrate.
The present invention also relates to a method of providing a photonics integrated circuit, the method comprising providing a photonics platform comprising a waveguide layer having a waveguide for guiding radiation in said photonics platform,
providing a recess in a substrate top surface of the photonics platform, the recess having at least one parallel surface substantially parallel with the substrate top surface of the photonics platform,
providing a wiring substrate and an active component positioned on and extending from the wiring substrate, the wiring substrate comprising a conductive element for providing electric signals to the active component, the active component having a component top surface facing away from the wiring substrate and component side surfaces whereby the active component is configured for coupling radiation to and/or from the active component through at least one of the component side surfaces,
placing the active component in the recess by positioning the component top surface of the active component on the at least one parallel surface of the structured recess such that lateral optical coupling between the waveguide in the photonics platform and at least one of the component side surface of the active component becomes possible.
It is an advantage of embodiments of the present invention that a method is provided providing good hybridly integrated photonics integrated devices. It is a further advantage that the method can be implemented in a mass production fab, with robust handling of electrical connections and active component in the wiring substrate.
The active component may be directly grown on the wiring substrate. Alternatively, the active component also may be fabricated separately and transferred to the wiring substrate.
Providing the photonics substrate may be performed using conventional processing technologies, such as for example CMOS processing when using a silicon-based photonics platform.
Providing the recess and providing the active component may comprise matching a depth of the recess and a position of at least one area in the at least one component side surface through which radiation will be coupled to and/or from the active component.
It is an advantage of the present invention that the size and layers of the active component as well as the depth of the recess can be controlled with nanometric accuracy, for example with a precision of 50 to 100 nm, improving alignment between the active component and the waveguide in the waveguide layer.
Providing a structured recess may comprise etching or grinding a structured recess.
Providing a recess may be performed by etching a recess in the photonics substrate. The recess may be a structured recess which may have a first flat surface substantially parallel with the top surface of the photonics substrate on which portions of the active component may be supported, once the active component is positioned in the photonics substrate, and a cavity positioned below the height of the first flat surface, wherein a conductor can be positioned when the active component is electrically connected using also an electrical connection at the component top surface. Providing a recess also may be performed by applying a grinding step. Placing the active component in the recess may comprise first positioning the active component in the recess and thereafter fixing a position of the active component with respect to the photonics substrate.
The fixing may be performed using any suitable way of fixation or combination of ways of fixation, such as for example using glue, e.g. curable glue, using mechanical fixation features, using welding, .... Fixing may be performed by providing an optical transparent glue between the side edges of the active component and the side edges of the recess in the photonics substrate.
The active component may be a radiation source and the method may further comprise electrically contacting the active component, generating radiation and, during said placing of said active component, detecting a radiation signal received from the active component in a waveguide of the photonics substrate and adjusting the placing of the active component as function of the detected radiation signal.
It is an advantage of embodiments of the present invention that coupling can be monitored during placement, for providing a high amount of coupling before adhering the active component to the photonics platform, and reducing error in x, y and/or z direction of the active component with respect to the waveguide of the photonics platform. It is an advantage that also rotational positioning errors can be corrected for during this alignment procedure.
The photonics circuit may comprise a radiation source or may be adapted for receiving radiation from an external radiation source, the method further may comprise, receiving radiation from said radiation source or external radiation source in the waveguide, allowing said radiation to interact with the active component, detecting said radiation after interaction with the active component and adjusting the placing of the active component as function of the detected radiation signal.
It is an advantage of embodiments of the present invention that coupling can be monitored during placement, for providing a high amount of coupling before adhering the active component to the photonics platform, and reducing error in x, y and/or z direction of the active component with respect to the waveguide of the photonics platform. It is an advantage that also rotational positioning errors can be corrected for during this alignment procedure.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates a photonics platform including a recess for use with a photonics integrated circuit in accordance with embodiments of the present invention.
FIG 2 illustrates a system or arrangement of an optically active component provided on a wiring substrate, for use with a photonics integrated circuit in accordance with embodiments of the present invention.
FIG 3 and FIG 4 illustrate alternative optical assemblies in accordance with embodiments of the present invention.
FIG 5 illustrate a top perspective of a photonics integrated circuit in accordance with embodiments of the present invention, showing the optoelectronics and photonic interconnections (not showing the electronic connections or wiring substrate).
FIG 6 illustrate a top perspective of a photonics integrated circuit in accordance with embodiments of the present invention, showing the electric connections and contacts.
FIG 7 and FIG 8 illustrate steps and optional steps of a method for forming a photonics integrated circuit in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present application reference is made to a photonics platform, reference is made to a variety of forms and material systems such as for example low-index contrast waveguide platforms (e.g. polymer waveguides, glass/silica waveguides, AlₓGa₁₋ₓAs waveguides, InₓGa₁₋ₓAs_{y}P_{1-y} waveguides), high-index contrast waveguides (e.g. Silicon-on-Insulator, semiconductor membranes), plasmonic waveguides (e.g. metal nano-particle arrays, metal layers).

A photonic integrated circuit (PIC) comprises a photonics platform and at least one integrated optical component, such as for example but not limiting to an integrated optical cavity, an integrated optical resonator, an integrated optical interferometer, an integrated optical coupler, a waveguide, a taper, a tuneable filter, a phase-shifter, a grating, a modulator, a detector, a source, a multiplexer, a demultiplexer or a combination thereof. The optical components can be active or passive. In embodiments according to the present invention, hybrid integration is performed. In other words, part of the photonic integrated circuit is made using a first technology, while another part, i.e. the active component, is made using another technology and the parts are thereafter combined.

The devices and methods of the present invention can be applied to the particular case of silicon photonics system, such as SOI (Silicon-on-Insulator) or SiN material systems, and also to material systems, such as for example III-V material systems, metallic layers, low index contrast material systems or a combination thereof. In particular the present invention allows hybrid integration of different material systems in a single PIC.

Silicon photonics is a very interesting material system for highly integrated photonic circuits. The high refractive index contrast allows photonic waveguides and waveguide components with submicron dimensions to guide, bend and control light on a very small scale so that various functions can be integrated on a chip. Moreover, silicon photonics offers a flexible platform for integration with surface plasmon based components which in turn allows for even higher levels of miniaturization. Both waveguide types allow a high level of miniaturization, which is advantageous. Furthermore, for both waveguide types light can be efficiently coupled in and out the PIC by use of e.g. a grating coupler or another coupling element.

Using silicon photonics also has some technological advantages. Silicon technology has reached a level of maturity in the CMOS industry that outperforms any other plane chip manufacturing technique by several orders of magnitude in terms of performance, reproducibility and throughput. Nano-photonic ICs can be fabricated with wafer-scale processes, which means that a wafer can contain a large number of photonic integrated circuits. Combined with the commercial availability of large wafers at a relative moderate cost, this means that the price per photonic integrated circuit can be very low. As indicated above, a disadvantage is however that some active components require the use of other materials which are little or not compatible with silicon-based photonics. Therefore, in embodiments of the present invention, these components need to be manufactured separately and hybridly integrated thereafter.

Where in embodiments of the present application reference is made to "optical coupling or radiation coupling", reference is made to assemblies which manage radiation signals including optical signals, but the skilled person would understand that this does limit the present invention to visible light, as other ranges of the radiation spectrum such as infrared or ultraviolet could be managed. The same applies, mutatis mutandis, to "optical signals" and the like.

Where in embodiments of the present invention reference is made to the component top surface of the active component being positioned on the at least one parallel surface of the recess, this does not exclude that there is a gap or a layer of glue or alike between the component top surface and the at least one parallel surface of the recess. It rather defines that the height position of the component top surface is at least partly determined by the at least one parallel surface of the recess. The component top surface of the active component thus may be in direct contact or in indirect contact with the parallel surface of the recess.

Accordingly, the present invention provides a photonics integrated circuit and a method of manufacture such assembly, where an optically active component can be integrated to a photonics platform for lateral transmission/interchange of radiation between the platform and the component, even if the materials of the device and platform are different (e.g. different semiconductor materials). Such coupling may be edge transmission or interchange of radiation. This is obtained by integrating the active component on the photonics platform using a wiring substrate. In some embodiments, such substrate, additionally, may include connections for activating the active component even if not yet installed in the platform. This allows improved alignment.

In a first aspect, the present invention provides a photonics integrated circuit, e.g. a photonics integrated circuit, combining a photonics substrate and at least one active component. According to embodiments of the present invention, the photonics integrated circuit comprises a photonics substrate comprising a waveguide layer having a waveguide for guiding radiation in said photonics substrate. The photonics integrated circuit also comprises a wiring substrate and an active component positioned on and extending from the wiring substrate. The wiring substrate comprises a conductive element for providing electric signals to the active component. The active component has a component top surface facing away from the wiring substrate and component side surfaces. The active component is configured for coupling radiation to and/or from the active component through at least one of the component side surfaces. According to embodiments of the present invention, the photonics substrate comprises a recess in a substrate top surface of the photonics substrate, the recess having at least one parallel surface substantially parallel with the substrate top surface of the photonics substrate. The active component is being positioned in the recess such that the component top surface of the active component is positioned on the at least one parallel surface of the recess. The photonics substrate and the active component are being configured for allowing lateral optical coupling between the waveguide in the photonics substrate and at least one of the component side surfaces of the active component.

According to embodiments of the present invention, the active component can be activated by electric signals provided through the wiring substrate. The active component can be activated already before the photonics integrated circuit is finalized. It can, for example, already be activated during assembly of the photonics integrated circuit, thus allowing, for example, active alignment during assembly. According to embodiments of the present invention, the active component is included in the recess and can interchange radiation, such as optical signals, from its side surfaces, with the photonics substrate. In some embodiments, the electrical signals may be provided to the wiring substrate from the photonics substrate, e.g. from a position of the photonics substrate away from the position where the active component needs to be integrated on the photonics substrate. The latter allows for an increased ease of contacting. Moreover, activation of the active component (for instance, a radiation source) is possible, by electric signals through the wiring substrate, before the photonics integrated circuit is formed. This allows aligning the active element with the photonics substrate while the active component is active. For instance, if the active component is a radiation source, it can be activated to emit light during component placement on the platform. The amount of radiation interchanged between the active element and the photonics substrate can be monitored using a radiation detection means also implemented on the photonics integrated circuit. This improves alignment since the amount of radiation interchanged between the active element and the photonics substrate can be monitored and optimized during alignment. Alternatively, if the active component is not a radiation source, an external radiation source or a radiation source integrated on the photonics substrate can be used during alignment.

The photonics integrated circuit may form a photonics integrated chip, for instance including opto-electronic devices (for example, for monitoring alignment, and/or for other functionalities such as signal analysis, signal conversion, etc.). Such a photonics integrated chip may for example be used for sensing, for signal processing, ....

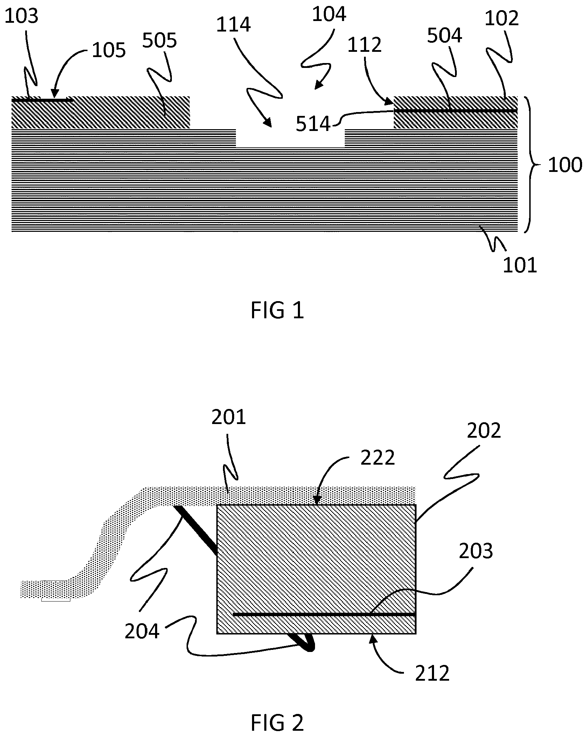

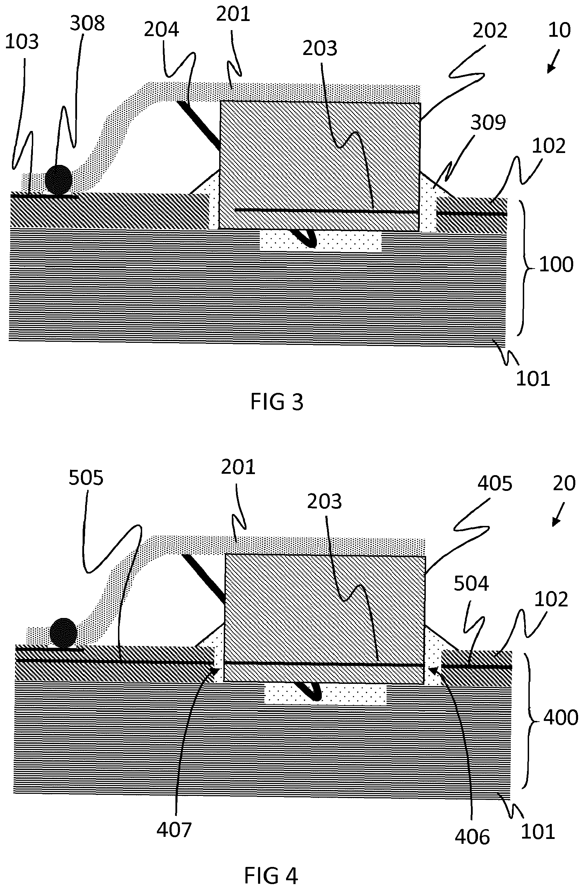

In the following, by way of illustration and embodiments of the present invention not being limited thereto, an exemplary photonics substrate and an exemplary active component of an exemplary photonics integrated circuit in accordance with embodiments of the present invention will be individually described in FIG 1 and FIG 2, and the exemplary photonics integrated circuit itself will be described in FIG 3 to FIG 6.

FIG 1 shows in detail an exemplary photonics platform 100, including a waveguide layer 102. The platform may be any substrate suitable for a PIC; it could be glass or comprise semiconductors, such as silicon or III-V semiconductors (GaAs, BN, InP, GaSb, GaN, etc.). In some embodiments of the present invention, the platform may comprise optical and/or electronic features such as vias, transistors, etc. In some embodiments, the photonics platform 100 may include a redistribution layer 103 (e.g. metal layer) for distributing electric signals along the photonics platform 100. The active component can be electrically coupled to it, e.g. via the wiring substrate, as will be explained with reference to FIG 3. In some embodiments, a heat sink may be provided, in the example shown as heat sink layer 101.

The waveguide layer 102 is provided in/on the photonics platform 100, for example the waveguide layer 102 can be grown thereon, by forming cladding and core of a waveguide, such as a planar waveguide, strip waveguide, etc. The waveguide layer 102 thus comprises at least one embedded waveguide 504. The thickness of the waveguide layer may for example, embodiments not being limited thereto, be between 100nm and 2µm for example in silicon, silicon nitride, silicon oxide, or III-V based platforms or may be between 1µm and 50µm for polymer waveguides.

The photonics platform 100 comprises a recess 104 where an active component can be placed in such a way that radiation (radiation signals, e.g. optical signals) can be interchanged between the photonics platform 100 and the active component, at one or several edges of the active component. The recess 104, which may also be referred to as the structured recess, is provided at a position where the waveguide layer 102 is present, since the idea is to couple radiation between the active component and the waveguide 504 in the waveguide layer 102. The recess may reach (in depth direction) for example at least reaching the embedded waveguide 504, or, preferably, it can extend deeper into the layer 102. This way, the wall 112 delimiting the recess 104 reveals a waveguide end 514, which may allow transfer of radiation (e.g. optical signals), i.e. allowing optical coupling. The recess thus may extend through the whole thickness of the waveguide layer 102, and preferably deeper in the photonics platform. The surface against which the active component will be positioned thus advantageously may be positioned deeper in the photonics platform than the waveguide. In some embodiments, the recess also comprises a further gap or cavity 114 forming a deeper lying cavity portion in the recess, for example at the bottom, for providing extra room for wiring as it will be explained with reference to FIG 3.

The recess with the stop layer can have a depth in the range 1 µm - 10µm, this is the typical range for a silicon photonics platform. It can go higher for polymer waveguides, up to 50-100 µm. The extra depth has to be larger than the typical wire bonding loop height, which may be for example between 30 µm and 300 µm. Deeper recess can be obtained without particular problems, provided that the substrate is thick enough.

FIG 2 shows in detail an exemplary active element 202 provided on a wiring substrate 201, which can be included in the photonics integrated circuit of FIG 3. The wiring substrate 201 provides electric signal routing to the active component 202 for activating (e.g. powering) the active component 202. It may include wiring such as conductive tracks embedded within or on the surface of the substrate. The wiring substrate 201 may comprise polymer materials, e.g. it can be a flexible circuit board. The wiring substrate may for example be made of layers of polyimide (or other thick polymer layers) or polyester films and copper (or other metal). The thickness may e.g. be between 12µm and 254µm. The flex circuit can include multiple layers of copper, i.e. multiple layers of embedded electronics. The minimum thickness typically is in the order of 10 µm. The thickness can be up to the order of 100µm. Thicker typically may be not flexible any more. Adhesive and solder mask layers also may be present.

In some embodiments, the wiring substrate 201 may be a rigid wiring substrate. Such substrates may for example be manufactured from epoxy-impgrenated fiberglass mats with patterned metals such as copper; nickel or gold layers, or they may be manufactured from phenolic-resin impregnated paper boards with patterned copper layers, or they may for example be made of ceramics with patterned metal layers, e.g. based on thick-film hybrid circuit boards, on low-temperature co-fired ceramic boards or based on high temperature co-fired ceramic boards, or it may be based on insulated metal substrates with patterned copper, nickel and gold layers.

In some embodiments, the ceramic and insulated metal substrates may advantageously provide good thermal properties, such as for example low thermal resistance, that allows sinking the component heat dissipation. The wiring substrate then also may become part of the thermal design of the integrated photonics assembly.

The active component 202 is positioned on the wiring substrate 201 and is extending therefrom. The active component 202 may be grown directly on the wiring substrate 201 or may be transferred to the wiring substrate 201. It is an advantage that the active component does not need to be directly integrated on the photonics substrate, thus allowing the use of different manufacturing techniques and allowing use of other materials that are more suitable for active materials. The active component may comprise semiconductor materials (IV group, III-V group, etc.). For example, the active component 202 may include InP semiconductors. Another example can be an optical modulator realized in an efficient photonics platform (i.e. silicon photonics, SOI substrate) bonded to a typical passive photonic platform (i.e. silicon nitride). It can also be GaN substrate, which is typically used for blue LEDs. The active component 202 may be a radiation emitting device, for example an edge-emitting radiation device, such as a light-emitting diode (LED), a superluminescent diode (SLED), a laser, etc. However, the present invention is not limited to said examples, and other active components 202 could be included, such as active resonators, active modulators, detectors, active multiplexers, active demultiplexers, etc.

The active component 202 may include multiple layers and functionalities that require a predetermined volume and design requirements. For example, in some embodiments, radiation can be interchanged closer to the surface or side 212 of the active component 202 which is opposite to the surface or side 222 in direct physical contact with the wiring substrate 201. In many active components, electric contact is required both at a component top side 212 and at a component bottom side 222 that is in direct physical contact with the wiring substrate. Although the wiring substrate can be used to provide electric signals to the active component directly through the side attached to the active component (e.g. through vias or the like), in some embodiments, at least one conductor 204 can be provided, for electrically connecting the component top side 212. Such connection may be made by a separate conductor 204 connecting the top side 212 with the wiring substrate 201.

The conductor 204 can be provided by soldering, wire-bonding from the active component to its wiring substrate 201, or any other suitable technique for connecting wiring substrates and/or active elements, or combinations thereof.

A platform such as the one shown in FIG 1 and a system of active component and substrate such as the one shown in FIG 2 can be combined for providing a photonics integrated circuit in accordance with embodiments of the present invention.

The photonics integrated circuit 10 shown in FIG 3 includes a recessed photonics substrate 100, for example a substrate as illustrated in FIG 1. It further includes a wiring substrate 201 including an active component 202, for example as the ones illustrated in FIG 2. The active component 202 is placed in the recess 104 of the photonics substrate (shown in FIG 1). This allows active components 202 to laterally couple radiation with the waveguide layer 102. The number of parasitic reflections can be substantially low or even avoided, especially when an optional index matching material is inserted after placing the active component 202, between the active component 202 and the waveguide layer 102. The positioning according to embodiments of the present invention allows, for example, edge-emitting light sources to be integrated as active components 202 in photonic platforms 100. The resulting photonics integrated circuit can be made very compact. Accurate and reproducible alignment can be easily provided without needing an optical bench. Handling of the active component 202 can be robust, thanks to the wiring substrate 201 attached thereto. Additionally, problems related to heterogeneous growth for forming light sources (typical of transfer printing) are mitigated or avoided. Thus, heterogeneous materials can be easily combined in a single photonics integrated circuit 10. For example, active components 202 including III-V materials can be easily integrated on a silicon-based platform (e.g. SOI or the like). Mounting or manufacturing an active component 202 on a wiring substrate 201 can be easily done in a manufacturing plant or fab, for example in mass production, thus reducing costs. This may be cheaper and more repeatable than other techniques such as transfer printing and the like, as well as potentially more accurate, since the positioning can be adjusted before permanently attaching the active component to the platform. Moreover, active alignment can be obtained whereby radiation coupling between the active component and the photonics substrate is evaluated during the alignment procedure.

The geometry of the recess 104 and/or of the active component 202 can be accurately adapted and configured to the configuration of the active component so that the active component can be accurately coupled laterally to the optical core of the waveguide layer. For example, the depth and shape of the recess can be accurately provided and/or determined. The distance from the surface 212 including electric contacts of the active component 202 to a waveguide layer 203 embedded therein (e.g. the number of layers and thickness thereof) can also be accurately provided and/or determined. This allows, for example, to accurately control the coupling between the waveguide 504 in the platform 100, particularly the waveguide end 514, and the waveguide 203 of the active component 202. The relative position of the active component and the waveguide can be controlled, advantageously providing accurate matching in the direction perpendicular to the plane defined by the photonics platform. The egress/ingress of radiation between the waveguides 203 of the active component and the waveguide 504 of the platform 100 can be done by lateral (edge) coupling in an accurate way, with a high amount of coupled signal intensity.

Attachment of the active component 202 to the photonics platform 100 can be provided by adhesive 309, for example glue which does not block or substantially diminish the intensity of radiation coupled between the active component 202 and the photonics platform 100 (e.g. optically transparent glue). Sufficient fixation is obtained, and thanks to the recess, only small quantities of glue need to be dispensed (for example, few microliters of adhesive), thus mitigating or removing problems related to shrinkage of adhesive. In some embodiments, the adhesive can be used as index matching material to improve the coupling between the active component and the photonics platform.

The active component may be activated electrically, which may produce power consumption and power dissipation. This may cause heating of the active component. In some embodiments of the present invention, the photonics substrate, in particular a layer 101 in the substrate 100, can act as thermal sink for the active component 202, by providing thermal contact between the active component and the substrate. Thermal contact may be direct physical contact, or may be contact through the very thin layer of adhesive 309 (thickness 1-20µm, if adhesive is applied). Alternatively, the wiring substrate may also act as a heat sink. Ceramic or insulated metal substrates are particularly suited for this purpose because of their low thermal resistance.

The active component 202 can be fixed in the recess with the component top surface 212 including electric contacts facing the platform 100. In some embodiments of the present invention, an additional cavity 114 is provided within the recess providing e.g. space for electrical connections, e.g. a conductor 204 to the top surface. The conductor 204 is provided between the wiring substrate 201 and the connection or connections on the top surface 212 of the active component 202 through the cavity 114 of the recess 104. The additional room provided by the recess 104 allows the wiring to extend under the active component where the surface contacts are provided. The recess may be provided in the waveguide layer, or it may even extend completely through it. For example, the recess, or the extra room for fitting wiring, may extend further into the photonics platform 100. For example, the recess 104 may have a stepped profile to provide mechanical support to the active component (and thermal sink), while the bottom of the recess 104 includes a cavity 114 over which the active component 202 extends, allowing a gap between the border of the cavity 114 and the active component 202 through which wiring can be provided.

The photonics integrated circuit 10 may further comprise an interconnection 308 for providing electric signals to another electrode of the active component through the wiring substrate. In some embodiments, the photonics platform 100 comprises a redistribution layer 103, as shown in FIG 1, which may be for example an embedded redistribution layer.

In some embodiments, the redistribution layer 103 may comprise electrically conductive material embedded within the photonics platform 100, for example including conductive tracks in, for example, a metal layer. The photonics platform 100 includes an area 105 for providing direct contact between the interconnection 308 and the redistribution layer 103. This allows introducing electric signals directly from the photonics platform to activate the active component 202 through the interconnection 308 and wiring substrate 201, optionally also through the conductor 204 of the wiring substrate. This allows a very compact PIC. The interconnection 308 may be a solder ball, solder bump, etc.

The area for receiving the interconnection 308 may comprise a window 105, as shown in FIG 1, revealing a part of the redistribution layer 103 (e.g. metal layer), in case the latter is embedded within the waveguide layer 102. However, the present invention is not limited to a window, and other connecting means such as vias can be provided, in other configurations, for example in the alternative configuration where the redistribution layer is provided on or embedded within the photonics substrate 100.

The electric contact between the redistribution layer, the wiring substrate and the active component may be a conductive contact. The choices of materials and configurations can be made such that the contact has a low resistance, so power and/or signal losses can be low or even insignificant.

FIG 4 shows the lateral view of an exemplary embodiment of a photonics integrated circuit 20. In the particular embodiment of FIG 4, the active component is a light-emitting device 405 which may emit light through a main emitting facet 406. In such embodiment, alignment can be provided by monitoring the amount of light coupled into the waveguide layer 102 of the platform 400, for example via sensors and/or an output such as a photodiode, optical fiber, etc., or to a light intensity sensor or the like, correcting the alignment until an acceptable coupling (e.g. maximum intensity of light measured) is provided.

In some embodiments of the present invention, a further, separate, monitoring system can be included. The light-emitting device 405 comprises not only a main emitting facet, but also a secondary emitting facet 407, on the opposite end of the waveguide 203. A second waveguide 505 can be provided on the waveguide layer 102 for coupling the secondary beam emitted through the secondary emitting facet into a monitoring system

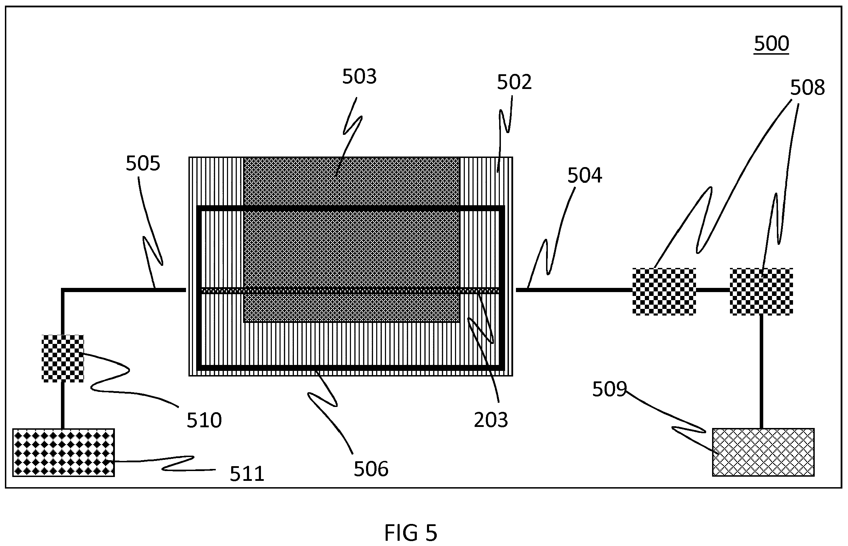

FIG 5 shows the top view of an exemplary embodiment of a photonics integrated circuit including a light emitting device 506, revealing further details of the photonics interconnection; it is to be noted that the wiring substrate is not shown for simplicity. Additional functionalities are provided, for example, by optoelectronic or photonic components 508 which may be connected to, bonded to, or embedded within the photonics platform 400, including a main circuit output 509. It may further include a second waveguide 505 and monitoring optoelectronic and/or photonic components 510, as well as a monitoring output 511.

The optoelectronics and further components 508, 510 (i.e. modulators, demultiplexers, detectors, lasers, etc.) might be included in the path, for example by embedding them in the optical circuit, or they may be bonded, flip-chipped, etc. Alternatively, the same approach for integrating as described in the present invention may be applied.

Alignment can be done by monitoring the output of the secondary beam emitted from a waveguide 203 of the light emitting device 506. Alternatively, alignment can be done by simultaneously monitoring the output of the main beam and of the secondary beam. This allows, for example, reducing the error in the rotation of the light emitting device 405 with respect to the photonics platform 400.

This principle can also be applied to other active components, for example to resonators of modulators, by introducing an optical signal in a secondary waveguide and monitoring the output signal through the main circuit output, for example, while the active component is activated.

It is also noted that the photonics platform shows the structured recess 502, which provides a step for mechanical support of the light emitting device 506, and a cavity 503 leaving a gap for the wire bonding loop (not shown).

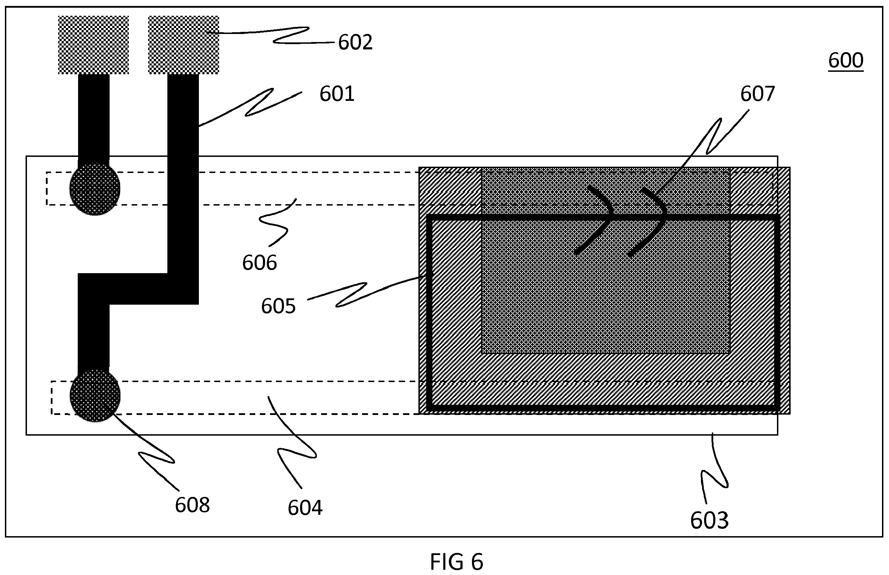

FIG 6 shows a top perspective of an exemplary embodiment of the present invention, showing the electrical interconnections embedded in a photonics platform 600. The active component is not shown for clarity, but it may be for example the light emitting device 506 of FIG 5. An electrical circuit 601 (e.g. a redistribution layer) may be embedded in the platform 600, for example on top of or in the waveguide layer or substrate. Bond pads 602 for external connections can be also provided. The wiring substrate 603 includes at least a conductive layer 604, 606, for instance a first metal track 604, for example for providing a first connection to the active component, for example on the same side 222 where the active component contacts the wiring substrate (such side 222 schematically shown in FIG 2). A solder pad 605 may be provided for soldering the active component to the wiring substrate. A second metal track 606 of the conductive layer 604, 606 can be provided between the electrical circuit 601 and the second side 212 facing the platform (as shown in FIG 2) via wire bond 607 or a plurality thereof. The electrical connection between the electric circuit 601 and the conductive layer 604, 606 can be provided by respective interconnects 608, for example solder balls provided in the wiring substrate 603.

Other configurations may be provided, for example additional wire bonds if multiple electric connections are provided on the side 212 facing the platform, etc.

The present invention allows providing a SLED, for example comprising InP semiconductor materials, hybridly integrated with a Si substrate, in an easy way, with possibilities of mass production, with good alignment and without compatibility issues.

In a second aspect, the present invention provides a method of manufacturing a photonics integrated circuit in accordance with embodiments of the first aspect. According to embodiments of the present invention, a method of providing a photonics integrated circuit is disclosed. The method comprises providing a photonics platform comprising a waveguide layer having a waveguide for guiding radiation in the photonics platform and providing a recess in a substrate top surface of the photonics platform. The recess has at least one parallel surface substantially parallel with the substrate top surface of the photonics platform. The method also comprises
providing a wiring substrate and an active component positioned on and extending from the wiring substrate. The wiring substrate comprises a conductive element for providing electric signals to the active component and the active component has a component top surface facing away from the wiring substrate and component side surfaces whereby the active component is configured for coupling radiation to and/or from the active component through at least one of the component side surfaces. The method also comprises placing the active component in the recess by positioning the component top surface of the active component on the at least one parallel surface of the structured recess such that lateral optical coupling between the waveguide in the photonics platform and the at least one of the component side surfaces of the active component becomes possible. As indicated, a gap or layer of glue may be present between the component top surface and the at least one parallel surface, so it may be in direct or in indirect contact. The position of the parallel surface of the structured recess will determine the height position of the active component.

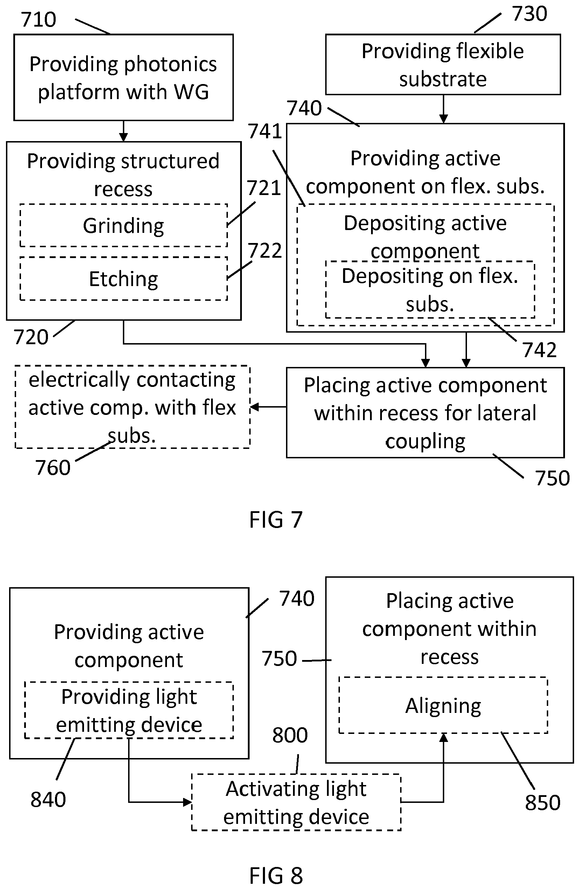

An exemplary method will now be discussed by way of illustration, embodiments of the present invention not being limited thereto. The flowcharts of FIG 7 and FIG 8 show steps of the manufacturing method, including optional steps. The method comprises providing 710 a photonics platform with a waveguide layer, and providing an active component 740, such as a light source, on a wiring substrate comprising connections for activating the active component. The photonics platform includes a recess, and the active component may be placed 750 and attached to the recess, thus allowing optical coupling between the active component to the photonics platform.

The method in some embodiments comprises embedding and hybridly integrating an active component which provides edge optical coupling, in a photonics (e.g. silicon) platform. Due to the hybrid integration, the method presents no incompatibility between the materials of the active component and the platform. At least some steps, or every step, of the method in accordance with embodiments of the present invention can be implemented in a mass production facility, with robust handling of electrical connections and active component in the wiring substrate.

The step of providing 710 a photonics platform comprising a waveguide layer may include growing a waveguide layer on a substrate, such as a Si substrate, SOI, etc. In some embodiments, at least one waveguide is provided in the waveguide layer. Further details of the waveguide may be as described in the first aspect. Integration of a waveguide in a photonics substrate, e.g. in a silicon-based photonics platform, is as such well known and for this process reference is made to the known state of the art.

The step of providing 730 a wiring substrate may comprise providing electric connections such as metal tracks on a wiring substrate, for example by printing, masking, etching, deposition, or other techniques suitable for wiring substrates. This step is as such also known and reference is made to fabrication steps as known in the state of the art.

The step of providing an active component 740 on the wiring substrate may comprise providing a light emitting device, such as a LED, SLED or laser. The active component may be attached, soldered or bonded to the substrate (e.g. via a bonding layer). The active component may be, for example, a multi-layered component which can be grown or deposited 741, for example by deposition, masking, etc., or a combination of several techniques. In some embodiments, the active component is grown or deposited 742 on the wiring substrate. Other features or characteristics may be as disclosed in the first aspect of the present invention.

The step of providing a recess 720 on the photonics platform may comprise etching 722, grinding 721, etc. a recess through the waveguide layer, optionally also at least partially through the underlying substrate. For example, a recess can be formed by grinding 721 an InP, GaSb, GaN substrate which can be done roughly, with low accuracy, but in a fast way and without manipulation of hazardous chemical components. Alternatively, it can be performed by time etching 722 or etching 722 with chemical selectivity, e.g. a SOI substrate, which can be accurately controlled. The latter is advantageous as the position of some of the surface of the recesses, e.g. the parallel surface parallel to the photonics platform top surface on which the active component is to be positioned, is critical for having a good coupling between the waveguide in the substrate and the active component.

The steps of providing 740 the active component and the providing 720 the recess will be performed such that after placing the active component in the recess, accurate optical coupling can be achieved between the active component and the waveguide layer of the photonics platform. This can be provided because the recess can be made with good accuracy and the deposition of a multi-layered active component can also be accurately controlled. For example, in the particular case of light emitting devices, the layers in the active component can be very well controlled because they come from deposition bottom-up deposition techniques. The top layers of a photonics substrate can also be controlled very well (50-100 nm precision) in a fab. This exact control in the direction perpendicular to the surface defined by the photonics platform simplifies the alignment between the active component and the waveguide of a photonics platform in terms of placement accuracy. In some embodiments, a deeper portion of the recess also is provided to accommodate a wire-bond, for example it may be just deeper than ∼30µm.

The step of placing 750 the active component within the recess with lateral (edge) optical coupling of the active component to the photonics platform may be done in some embodiments by active alignment of the active component with the waveguide layer of the photonics platform. During active alignment, the active component is activated 760, and radiation is coupled between the photonics platform and the active component. Such radiation may be stemming from the active component, in case the active component is a radiation emitting element, or may be stemming from the photonics platform, e.g. from a radiation source integrated in the photonics platform or from an external radiation source connected to the photonics platform.
For active alignment, the method also comprises monitoring the radiation coupling (e.g. using a detector which may be integrated in the photonics platform, or floating above a grating coupler. Alternatively, the detector may also be fiber coupled). Alignment is performed as function of the detected radiation, e.g. by moving the active component relatively to the recess until the highest radiation intensity is detected. The step of activating 760 thus can be done while placing 750 the active component in the recess. The amount of coupling can be monitored before fixating the active component to the photonics platform.

For example, as shown in FIG 8, the step of providing 740 the active component may comprise providing 840 a light emitting device. Then, the device can be activated 800 (for example by first electrically contacting 760 the active component to power it). Then during the step of placing 760 the active component, alignment can be performed 850, by using the main waveguide and optionally a secondary waveguide of the waveguide layer. In some embodiments, the main waveguide of the photonics platform can be used, whereby a detector temporarily or permanently coupled to that main waveguide is used. In other embodiments, the active component may couple radiation at a second side surface where radiation is coupled with an optionally secondary waveguide where a detector is present for detecting radiation intensity for optimizing the alignment in view of the detected radiation intensity.

The monitoring waveguide can also be used to introduce a test signal to control the alignment by analyzing the signal coupled through the active component to the main waveguide, in case the active component is not a light emitting device but a resonator, modulator, etc.

This allows optimizing the lateral and rotational alignment when integrating the active component to the photonics platform.

In some embodiments, further optoelectronics and/or photonic devices for treating signals through the waveguides of the platform may be provided, by bonding, by embedding, etc. Optical in and output fibers also may be introduced.

In order to activate the active component, electric activation signals can be introduced into the wiring substrate. The method may also comprise electrically contacting 760 the active component with the wiring substrate, e.g. by further providing a redistribution layer in the photonics platform, and by making at least one interconnection (e.g. solder ball, etc.) between the electric connection or connections of the wiring substrate and the redistribution layer. Thus, a highly compact photonics integrated circuit can be provided, where the photonics platform provides electrical signals and the active component provides optical signals, or treatment of optical signals, forming a compact PIC with good coupling.

## Claims

1. A photonics integrated circuit(10, 20) comprising:
- a photonics platform (100, 400, 500, 600) comprising a waveguide layer (102) having a waveguide for guiding radiation in said photonics platform (100, 400, 500, 600),
- a wiring substrate (201, 603) and an active component (202, 405, 506) positioned on and extending from the wiring substrate (201, 603), the wiring substrate (201, 603) comprising a conductive element (604, 606) for providing electric signals to the active component, the active component (202, 405, 506) having a component top surface facing away from the wiring substrate and component side surfaces whereby the active component (202, 405, 506) is configured for coupling radiation to and/or from the active component (202, 405, 506) through at least one of the component side surfaces,
wherein
the photonics platform (100, 400, 500, 600) comprises a recess (104, 502) in a substrate top surface of the photonics platform (100, 400, 500, 600), the recess (104, 502) having at least one parallel surface substantially parallel with the substrate top surface of the photonics platform (100, 400, 500, 600), and
the active component (202, 405, 506) is being positioned in the recess (104, 502) such that the component top surface of the active component (202, 405, 506) is positioned on the at least one parallel surface of the recess (104, 502),
the photonics platform (100, 400, 500, 600) and the active component (202, 405, 506) being configured for allowing lateral optical coupling between the waveguide in the photonics platform (100, 400, 500, 600) and at least one of the component side surfaces of the active component (202, 405, 506).

2. The photonics integrated circuit (10, 20) according to claim 1, wherein the wiring substrate (201, 603) further comprises an interconnection (308, 608) in contact with the conductive element (604, 606) and wherein the photonics platform (100, 400, 500, 600) comprises a redistribution layer (103, 601) in electric contact with the interconnection (308, 608) of the wiring substrate (201, 603).

3. The photonics integrated circuit (10, 20) according to any of the previous claims, wherein the active component (202, 405, 506) is at one side (222) in direct contact with the wiring substrate (201, 603) and comprises at said one side a first electrical contact for electrically connecting the active component (202, 405, 506), and/or wherein the active component comprises a second electrical connection at the component top surface at an opposite side (212) of the side (222) in direct contact with the wiring substrate (201, 603).

4. The photonics integrated circuit (10, 20) according to claim 3, wherein the recess (104, 502) comprises a cavity (114, 503) positioned below the height of the parallel surface, the cavity hosting a conductor (204) in connection with the second electrical connection at the component top surface of the active component (202, 405, 506) for electrically powering the active component (202, 405, 506).

5. The photonics integrated circuit (10, 20) of any one of the previous claims, wherein the photonic platform further comprises a heat sink and the structured recess (104, 502) is shaped so that thermal contact is provided between the active component (202, 405, 506) received in the recess and the heat sink or wherein the wiring substrate (201, 603) provides a heat sink.

6. The photonics integrated circuit (10) of any one of the previous claims wherein attachment between the active component (202, 405, 506) and the photonics substrate (100, 400, 500, 600) is provided by adhesive (309), the adhesive (309) being transparent to the radiation that can be interchanged between the platform and the active component (202, 405, 506).

7. The photonics integrated circuit (10, 20) of any one of the previous claims, wherein the active component (202, 405, 506) is
- a radiation emitting device (405, 506), such as a light source, or
- any of an active modulator, a tunable filter, an active phase shifter, an active multiplexer or an active demultiplexer, or
- a detector.

8. The photonics integrated circuit (20) according to any of the previous claims, wherein the active component (202, 405, 506) is configured for coupling radiation at at least two positions to and/or from the active component (202, 405, 506), and wherein the photonics circuit comprises at least one detection element for detecting, during an alignment procedure, radiation coupled between the active component (202, 405, 506) and the photonics substrate (500) so as to optimize alignment.

9. A method of providing a photonics integrated circuit, the method comprising
- providing (710) a photonics platform (100, 400, 500, 600) comprising a waveguide layer (102) having a waveguide for guiding radiation in said photonics platform (100, 400, 500, 600),
- providing (720, 721, 722) a recess in a substrate top surface of the photonics platform (100, 400, 500, 600), the recess (104, 502) having at least one parallel surface substantially parallel with the substrate top surface of the photonics platform (100, 400, 500, 600),
- providing (730) a wiring substrate (201, 603) and an active component (202, 405, 506) positioned on and extending from the wiring substrate (201, 603), the wiring substrate (201, 603) comprising a conductive element (604, 606) for providing electric signals to the active component, the active component (202, 405, 506) having a component top surface facing away from the wiring substrate and component side surfaces whereby the active component (202, 405, 506) is configured for coupling radiation to and/or from the active component (202, 405, 506) through at least one of the component side surfaces,
- placing (750, 850) the active component in the recess (104, 502) by positioning the component top surface of the active component (202, 405, 506) on the at least one parallel surface of the structured recess (104, 502) such that lateral optical coupling between the waveguide in the photonics platform (100, 400, 500, 600) and at least one of the component side surface of the active component (202, 405, 506) becomes possible.

10. The method according to claim 9, wherein providing the recess and providing the active component (740, 741, 742, 840) comprises matching a depth of the recess and a position of at least one area in the at least one component side surface through which radiation will be coupled to and/or from the active component.

11. The method according to any of claims 9 to 10, wherein providing a structured recess comprises etching (722) or grinding (721) a structured recess.

12. The method according to any of claims 9 to 11, wherein placing (750, 850) the active component in the recess comprises first positioning the active component in the recess and thereafter fixing a position of the active component with respect to the photonics substrate.

13. The method according to any of claims 9 to 12, the active component being a radiation source, the method further comprising electrically contacting (760) the active component, generating radiation and, during said placing (750, 850) of said active component, detecting a radiation signal received from the active component in a waveguide of the photonics substrate and adjusting the placing of the active component as function of the detected radiation signal.

14. The method according to any of claims 9 to 12, the photonics circuit comprising a radiation source or being adapted for receiving radiation from an external radiation source, the method further comprising, receiving radiation from said radiation source or external radiation source in the waveguide, allowing said radiation to interact with the active component, detecting said radiation after interaction with the active component and adjusting the placing of the active component as function of the detected radiation signal.
